Europäisches Patentamt

European Patent Office

Office européen des brevets

(19)

(11) **EP 0 883 463 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(51) Int Cl.[7]: **B23Q 5/54**, B23Q 15/007, B23Q 15/18

(21) Anmeldenummer: **97919248.1**

(22) Anmeldetag: **18.02.1997**

(86) Internationale Anmeldenummer:
**PCT/DE97/00303**

(87) Internationale Veröffentlichungsnummer:
**WO 97/31749 (04.09.1997 Gazette 1997/38)**

(54) **VERFAHREN UND VORRICHTUNG ZUR KOMPENSATION DYNAMISCHER VERLAGERUNGEN AN SPANABHEBENDEN WERKZEUGMASCHINEN**

PROCESS AND DEVICE FOR CORRECTING DYNAMIC MISALIGNMENTS IN CUTTING MACHINE TOOLS

PROCEDE ET DISPOSITIF DE COMPENSATION DE DECALAGES DYNAMIQUES SUR DES MACHINES-OUTILS D'USINAGE

(84) Benannte Vertragsstaaten:
**CH DE FR GB IT LI**

(30) Priorität: **01.03.1996 DE 19607941**
**30.07.1996 DE 19630694**

(43) Veröffentlichungstag der Anmeldung:
**16.12.1998 Patentblatt 1998/51**

(73) Patentinhaber: **Fraunhofer-Gesellschaft zur Förderung der angewandten Forschung e.V. 80636 München (DE)**

(72) Erfinder:
• **OSTENDARP, Heinrich
D-52134 Herzogenrath (DE)**
• **HILBING, Robert
D-52072 Aachen (DE)**

(74) Vertreter: **König, Werner, Dipl.-Ing.
Habsburgerallee 23-25
52064 Aachen (DE)**

(56) Entgegenhaltungen:
**DE-A- 4 028 006**

**Beschreibung**

Die Erfindung betrifft ein Verfahren und eine Einrichtung zur Kompensation dynamischer Verlagerungen an spanabhebenden Werkzeugmaschinen. Die Kompensation soll Verlagerungen in der relativen Bewegungsrichtung zwischen Werkzeug und Werkstück, der sogenannten Sensivitätsrichtung, die als Abweichung von einer Sollgröße auftreten, ausgleichen.

Um mit spanabhebenden Werkzeugmaschinen hohe Bearbeitungsqualitäten erzielen zu können, sollten möglichst nur geringe Bewegungsabweichungen von der idealen Bearbeitungsbahn des Werkzeuges bezüglich des Werkstücks auftreten. Tatsächlich verursachen jedoch Maschinenschwingungen, statische Maschinenverformungen und thermisch bedingte Verformungen Bewegungsabweichungen, die zu Form- und Rauhheitserhöhungen der bearbeiteten Oberflächen führen.

Beim Betrieb spanabhebender Maschinen werden z.B. über die Antriebe, die Getriebe, die Lager oder den Schneideingriff Schwingungen in die Maschinen eingekoppelt. Verändert sich z.B. beim Längsdrehen auf einer Drehmaschine der Abstand zwischen Werkstückdrehachse und Werkzeug dynamisch, so führt dies zu einer erhöhten Oberflächenrauhheit auf dem Werkstück. Die axiale Verlagerung eines Stirnfräsers oder einer Seitenschleifscheibe bezüglich des Werkstücks führt ebenfalls zu schlechteren Oberflächen. Beim radialen Fräsen oder beim Außenrundschleifen führt eine Verlagerung der Werkzeugdrehachse in Richtung der Oberflächensenkrechten des Werkstücks zu schlechteren Bearbeitungsergebnissen.

Die Schwingungen können auch eine Linearachse an sich betreffen und eine Bewegungsabweichung von der idealen Sollbewegung verursachen. So werden die Schwingungen der linear bewegten Werkzeug- oder Werkstückhalterung in Zustellrichtung beispielsweise bei Positioniervorgängen oder durch dynamische Störkräfte hervorgerufen.

Eine Möglichkeit, die Bewegungsabweichungen zu reduzieren, besteht in der konstruktiven Maschinenauslegung. So kann durch einen erhöhten Aufwand bei der Lagerung, der Getriebegestaltung und bei der Kopplung der Antriebe eine Verbesserung erreicht werden. Die Kosten für solche Maßnahmen erreichen jedoch sehr schnell Werte, die, gemessen an der erreichbaren Verbesserung, nicht mehr akzeptabel sind.

Weitere Ansätze zur Genauigkeitsverbesserung bestehen in der Kompensation der Bewegungsabweichungen. Dabei könnte man zum einen die Störursachen durch eine Regelung reduzieren. Zum anderen könnte die Wirkung der Störung mit einer Regelung kompensiert werden. Beides stößt bei den in Maschinen typischerweise auftretenden Frequenzen bis 1000 Hz aber auf prinzipielle Grenzen, da die Meß-, Rechen- und Zustellzeit in der Größenordnung einer Periodendauer der Schwingung liegt und so keine stabile Regelung möglich ist. Daher besteht ein weiterer Ansatz in der Messung der Ursache der Störung, um während der Übertragungszeit der Störungsursache an der Wirkstelle eine geeignete kompensatorische Zustellung an der Wirkstelle zu erreichen. Das Verfahren ist als sogenannte Echokompensation bekannt. Da die Messung der Störgrößen hierbei außerhalb des eigentlichen Prozesses der Werkstückbearbeitung erfolgt, ist eine möglichst exakte Modellnachbildung des Prozesses durch die Kompensatorstrecke nötig, damit die Kompensation sowohl hinsichtlich ihres Zeitpunktes als auch in ihrer Höhe mit dem realen Wert der Bewegungsabweichung übereinstimmt. Die Ergebnisse dieser Methode sind unbefriedigend. Eine entscheidende Verbesserung der Oberflächengüte am bearbeiteten Werkstück tritt nicht ein.

Der Erfindung liegt die Aufgabe zugrunde, ein Verfahren und eine Vorrichtung der eingangs genannten Art zu finden, mit denen eine wesentlich genauere Kompensation der dynamischen Verlagerungen und damit u.a. eine spürbare Verbesserung der Oberflächengüte von Werkstücken erreichbar ist.

Erfindungsgemäß wird die Aufgabe dadurch gelöst,

daß die die Verlagerungen an ihrer Wirkstelle zwischen Werkzeug und Werkstück unmittelbar bestimmenden Störgrößen ermittelt werden,

daß aus den Störgrößen ein mathematisches Prozeßmodell generiert wird, auf dessen Basis die nichtstatistischen Anteile der Störgrößen generiert werden,

daß auf der Basis dieses Prozeßmodells eine voreilende Schätzung des zukünftigen Verhaltens der an der Wirkstelle auftretenden Störgrößen

und entsprechend diesem zukünftigen Störgrößenverhalten die Kompensation der Verlagerung in Sensivitätsrichtung vorgenommen wird.

In erfindungsgemäß bevorzugter Weise kann vorgesehen sein, daß die Kompensation der Verlagerung in Sensivitätsrichtung durch die Zustellung eines zusätzlichen in der Maschine in Sensivitätsrichtung wirksamen Aktors, durch die Zustellung eines vorhandenen, in Sensivitätsrichtung wirksamen Antriebes der Maschine oder durch die dynamische Verschiebung einer zusätzlichen an der Maschine angeordneten Hilfsmasse in Sensivitätsrichtung erfolgt.

Mit dem Verfahren liegt erstmals eine Echtzeitkompensation dynamischer Einflüsse vor. Im Gegensatz zu bisher bekannten Verfahren müssen dazu keine Systemeigenschaften der Maschine a priori bekannt sein. Eine an der Maschine zusätzlich angebrachte Zustelleinheit (Aktor), die ohnehin vorhandene Zustelleinheit der Maschine oder die Bewegung einer dynamisch verschobenen Hilfsmasse verändert zu jedem Zeitpunkt in Sensitivitätsrichtung den Abstand zwischen Werkstück und Werkzeughalterung so, daß die ansonsten auftretende dynamische Verlagerung zwischen Werkzeug und Werkstück in Sensitivitätsrichtung ausgeglichen wird.

Ermöglicht wird die Vorhersage dadurch, daß die in Werkzeugmaschinen auftretenden realen Verlagerungen typischerweise im Frequenzbereich Amplitudenüberhöhungen bei bestimmten Frequenzen aufweisen.

In erfindungsgemäß bevorzugter Weise wird als Störgröße die Verlagerung direkt zwischen Werkstück und Werkzeughalterung messen, während sie zwischen Werkstück und Werkzeug erfindungsgemäß, z. B. durch einen zusätzlichen, zwischen Werkzeug und Werkzeughalterung wirksamen Aktor, kompensiert wird.

In ebenfalls erfindungsgemäß bevorzugter Weise können auch als Störgrößen die Bewegungen am Werkzeughalter, am Spindelkasten und/oder an der Spindel in Sensitivitätsrichtung gemessen werden. Diese Variante ist insbesondere bei Drehmaschinen anwendbar. Auf sie kann bevorzugt dann zurückgegriffen werden, wenn die direkte Messung nicht möglich ist oder zu Meßfehlern führen würde.

In ebenfalls erfindungsgemäß bevorzugter Weise kann als Störgröße auch die bei der Bearbeitung entstehende Kraft zwischen Werkzeug und Werkstück gemessen werden. Dabei ist es möglich, durch die Nutzung von mehreren Kraftsensoren verschiedene Komponenten der Kraft zu bestimmen: Die in Sensitivitätsrichtung wirkende Passivkraft, die senkrecht dazu wirkende Schnittkraft und die senkrecht auf beiden wirkende Vorschubkraft. Aus allen Kraftanteilen können Informationen über die Schnittiefe und damit die dynamische Verlagerung gewonnen werden, da ein näherungsweise linearer Zusammenhang zwischen Schnittiefe und Kraft besteht.

Wenn ein bzw. mehrere Kraftsensoren im Kraftfluß angebracht sind, muß das aus dem Kraftsignal resultierende Verlagerungssignal um die bekannte Zustellung des Aktors korrigiert werden, um auf die tatsächliche Verlagerung zu schließen. Gleiches gilt für den Fall, daß die Verlagerung direkt gemessen wird und die Zustellung des Aktors oder des Antriebes in Reihe mit dem gemessenen Verlagerungssignal liegt.

In erfindungsgemäßer Weise kann vorgesehen sein, daß das mathematische Prozeßmodell einen autoregressiven Charakter hat oder daß das mathematische Prozeßmodell nach der Moving-Average-Methode arbeitet. Ebenso ist eine Kombination beider Verfahren oder die Verwendung anderer bekannter Prozeßmodelle möglich. Derartige Prozeßmodelle sind z.B. aus der Sprachsignalverarbeitung bekannt und dienen dort zur Reduzierung der Menge der Übertragungsdaten.

In erfindungsgemäßer Weise kann vorgesehen sein, daß das mathematische Prozeßmodell als nachrichtentechnischer Filter realisiert ist.

Um eine derartige Kompensation prinzipiell zu ermöglichen, muß die auftretende Verlagerung zwischen Werkzeug und Werkstück um eine gewisse Vorhersagezeit vor ihrem tatsächlichen Auftreten bekannt sein. Das Verfahren kann deshalb erfindungsgemäß so realisiert werden, daß die Schätzung mindestens um die Gesamtverzögerungszeit der Meß-, Rechen- und der Zustellstrecke voreilt. Diese Mindestvorhersagezeit resuliert daher, daß z. B. jede aktive Stelleinrichtung eine gewisse Zeit benötigt, um nach Anlegen eines Stellsignals tatsächlich den gewünschten Stellwert zu erreichen. Außerdem nimmt die Messung des Ausgangssignals und die Berechnung des Stellsignals Zeit in Anspruch.

Außerdem kann in erfindungsgemäß bevorzugter Weise vorgesehen sein, daß die aufgrund einer Schätzung erfolgte Zustellung gemessen, mit der tatsächlichen Verlagerung verglichen und die Differenz zur Adaption des mathematischen Prozeßmodells verwendet wird.

Statt eines Meßwertes für die erfolgte Zustellung kann bei einer vereinfachten Variante auch der Schätzwert mit der tatsächlichen Verlagerung verglichen und die Differenz zur Adaption des mathematischen Prozeßmodells verwendet werden.

Außerdem kann in erfindungsgemäß bevorzugter Weise vorgesehen sein, daß die Störgröße und die Differenz zwischen realer und zuvor geschätzter Störgröße zur Adaption des mathematischen Prozeßmodells verwendet werden.

Zwei geeignete Vorgehensweisen für die Zustellung des Aktors oder des Zustellantriebes der Maschine bzw. die Aktivierung der Hilfsmasse sind erfindungsgemäß möglich. Einmal kann die Zustellung bzw. Aktivierung so gesteuert werden, daß ihre Wirkung zeitgleich mit der auf die Schätzung bezogenen realen Änderung der an der Wirkstelle auftretenden Störgröße ist.

Diese Variante wird dann angewendet, wenn mit geringer Spandicke und dem Ziel einer hohen Oberflächengüte gearbeitet wird.

Die Erfindung läßt sich jedoch auch zur Beherrschung eines weiteren Problems vorteilhaft einsetzen:

Während der Bearbeitung schwingen Maschinen vornehmlich mit ihren Eigenfrequenzen. Diese übertragen sich vor allem bei spanenden Prozessen mit hohen Schnittleistungen als Welligkeiten gleicher Frequenz auf das Werkstück. Ein erneutes Einschneiden in die zuvor erzeugte Welle z.B. nach einer Umdrehung des Werkstücks führt zu einer weiteren dynamischen Anregung der Maschine. Dieser Effekt wird regeneratives Rattern genannt. Er hängt wesentlich von der Phasenbeziehung zwischen der vorhandenen Oberflächenwelligkeit und der Werkzeugschwingung in Sensitivitätsrichtung ab. Um ein regeneratives Rattern zu vermeiden, konnte bislang nur die Schnittleistung reduziert werden.

Zur Vermeidung des regenerativen Ratterns wird die Zustellung oder die Aktivierung der Hilfsmasse so gesteuert, daß ihre Wirkung zeitlich vor der auf die Schätzung bezogenen realen Änderung der an der Wirkstelle auftretenden Störgröße zustande kommt.

Die während des Ratterns vorliegende Verzögerung der Werkzeugschwingung gegenüber der Oberflächenwelligkeit wird durch eine Prädiktion und eine voreilende Werkzeugzustellung kompensiert, so daß keine Energieeinkopplung mehr auftreten kann. Damit ist eine aktive Phasenverschiebung zur Vermeidung des regenerativen Rattereffektes möglich, was eine Erhöhung der Zerspanleistung erlaubt. Ermöglicht wird dieser Effekt dadurch, daß das Verfahren in der Lage ist, die Verlagerung in Sensitivitätsrichtung auch für längere Zeiträume als die Verzögerungszeit der Meß-, Rechen- und Zustellstrecke vorherzusagen.

Bei Zustell- und Positionierbewegungen werden dynamisch bedingte Bewegungsabweichungen der linear bewegten Einheit im System Werkstück-Werkzeug von der idealen Zustellbewegung kompensiert.

Über das konventionelle Regelungsprinzip hinausgehend wird dabei ausgenutzt, daß die Vorhersage einen Bandpaß für die dominanten Frequenzanteile des Zustellfehlers darstellt. Hierdurch werden andere als die dominanten Frequenzanteile des Zustellfehlers nicht auf den Antrieb zurückgekoppelt. Im Vergleich zu konventionellen Regelstrategien weist eine derartige bandpaßgefilterte Rückkoppelung eine wesentliche größere Effektivität und Stabilität auf. Eine besonders gute Filterwirkung kann erreicht werden, wenn hierbei als adaptiver Filter für die Vorhersage der Schwingung ein Infinite-Impuls-Response-Filter verwendet wird.

Bezogen auf einen Hilfsmassendämpfer stellt die Vorhersage ebenfalls einen Bandpaßfilter für die dominanten Frequenzanteile der schwingenden Maschinenbaugruppe dar. Versehen mit einer geeigneten Verzögerung und Verstärkung dient die Vorhersage zur Bedämpfung der dominanten Frequenzen.

Zur Durchführung des Verfahrens ist eine Einrichtung geeignet, die erfindungsgemäß ausgerüstet ist mit einer Meßeinrichtung zur Messung der die Verlagerungen an der wirkstelle unmittelbar bestimmenden Störgrößen

und einer zur Darstellung eines mathematischen Prozeßmodeiis geeigneten Recheneinrichtung, die die gemessenen Störgrößen verarbeitet, eine Schätzung des zukünftigen Verhaltens der an der Wirkstelle auftretenden Störgröße vornimmt und entsprechend der Schätzung taktweise ein Signal für die Kompensation der Verlagerung in Sensivitätsrichtung abgibt.

Die Einrichtung kann erfindungsgemäß so aufgebaut sein, daß zur Kompensation der Verlagerung in Sensivitätsrichtung im System Werkzeug-Werkstück zusätzlich zu einem vorhandenen, in Sensivitätsrichtung wirksamen Antrieb ein in Sensivitätsrichtung wirksamer Aktor angeordnet ist.

Der Aktor ist bevorzugt zwischen der Werkstückhaltevorrichtung und der Maschine angeordnet, um so möglichst nahe der Wirkstelle der Verlagerungen zu sein.

Stimmt z.B. bei einer Drehmaschine die Sensitivitätsrichtung mit der Achsrichtung der Spindel überein, erfolgt also eine stirnseitige Bearbeitung des Werkstücks, so kann der Aktor auch zwischen Werkstück und Werkstückhaltevorrichtung, zwischen Werkzeug und Werkzeughalter oder zwischen dem Werkzeughalter und der Maschine angeordnet sein.

Für den Aktor sind verschiedene Antriebsprinzipien verwendbar. So kann der Aktor piezoelektrisch oder magnetostriktiv angetrieben sein. Es kann sich auch um einen hydraulisch wirkenden Aktor oder um einen Aktor nach dem Prinzip eines Linearmotors handeln.

Als Aktor eignet sich insbesondere eine Zustelleinrichtung, die unabhängig von der Höhe der Zustellung eine konstante Zustellzeit benötigt und sich somit wie ein frequenzunabhängiges Verzögerungsglied verhält.

Die Einrichtung kann erfindungsgemäß auch so aufgebaut sein, daß zur Kompensation der Verlagerung in Sensivitätsrichtung auf mindestens einer der die Verlagerung verursachenden Maschinenkomponenten mindestens eine über einen Aktor in Sensitivitätsrichtung verschiebbare Hilfsmasse angeordnet ist (Hilfsmassendämpfer).

Bevorzugt wird die Hilfsmasse elektromagnetisch oder piezoelektrisch angetrieben.

Dieser Hilfsmassendämpfer sitzt z.B. auf dem Werkzeughalter und wird entgegen der Richtung der vorhergesagten Verlagerung des Werkzeughalters beschleunigt. Bei phasen- und amplitudengleicher Übereinstimmung der so hervorgerufenen Schwingung des Hilfsmassendämpfers lassen sich insbesondere die dominanten Schwingungen des Werkzeughalters wirksam bedämpfen.

Unter bestimmten Voraussetzungen kann zur Kompensation der Verlagerung in Sensivitätsrichtung auch der ohnehin vorhandene Zustellantrieb in dieser Richtung dienen. Bevorzugt handelt es sich dann um einen Antrieb, für den ein Linearantrieb verwendet ist.

Diese Variante ist insbesondere anwendbar bei sogenannten Fast-Tools. Hierbei wird ein Linearantrieb verwendet, um in einer Präzisionsdrehmaschine eine aktive Werkzeugzustellung hervorzurufen. Fast-Tool-Einrichtungen sind dazu geeignet, auch rotationsunsymetrische Oberflächen zu drehen, beispielsweise asphärische Brillengläser. Durch die Schnittkräfte und die Werkzeugzustellung werden mechanische Schwingungen angeregt, die der Soll-Zustellbewegung überlagert sind. Ohne eine aktive Beeinflussung dieser Schwingungen können keine genügenden Oberflächenqualitäten erzielt werden. Mittels des erfindungsgemäßen Verfahrens kann die Oberflächenrauheit dagegen auf typischerweise 10 Nanometer reduziert werden, was nur einen Bruchteil des bisher erreichten Wertes darstellt. Die Bewegungsabweichungen können in diesem Fall mit einem Schwingungssensor gemessen werden, der unmittelbar am bewegten Teil des Linearantrieb montiert ist.

Die Kompensation ist bei Fast-Tools allerdings auch mit Hilfe eines zusätzlich am Linearantrieb montierten Aktors, vorzugsweise eines Piezoaktors, möglich.

Die Meßeinrichtung kann beispielsweise ein zur Messung von relativen Verlagerungen geeigneter kapazitiver Sensor oder ein zur Messung von absoluten Verlagerungen geeigneter Schwingungssensor sein. Sie kann auch durch ein Interferometer realisiert sein.

Die Meßeinrichtung sollte bevorzugt am Werkzeughalter oder an dessen Werkzeugaufnahme bzw. wie auch ein Aktor zwischen Werkstückhaltevorrichtung und Werkstück oder Maschine oder zwischen Werkzeughalter und Werkzeug oder Maschine angeordnet sein.

Ist eine direkte Anordnung der Meßeinrichtung nicht möglich oder würde sie aufgrund der Werkstückabmessungen oder -form zu fehlerhaften Messungen führen, so kann sie erfindungsgemäß auch aus mehreren Meßaufnehmern bestehen, die die Bewegungen der Spindel, des Spindelkastens und des Werkzeuges oder Anteile von deren Bewegungen abbilden.

Erfindungsgemäß ist die Messung der Verlagerung auch durch eine Kraftmessung möglich. Hierzu können ein oder mehrere Kraftsensoren vorgesehen sein, die beispielsweise zwischen Werkzeug und Aktor angeordnet sind.

Die Erfindung soll nachstehend anhand von Ausführungsbeispielen näher erläutert werden. In den zugehörigen Zeichnungen zeigen:

Fig. 1     die schematische Darstellung einer Drehmaschine mit einem mittels des erfindungsgemäßen Verfahrens angetriebenen zusätzlichen Aktor,

Fig. 2     die Modellbildung bei dem bekannten Echoverfahren,

Fig. 3     dazu im Vergleich die Modellbildung bei dem erfindungsgemäßen Verfahren,

Fig. 4     eine Prinzipdarstellung des erfindungsgemäßen Verfahrens zur Vorhersage einer Bewegungsabweichung auf der Grundlage eines autoregressiven Prozeßmodells,

Fig. 5     ein Beispiel für eine Werkzeug-Werkstück-Schwingung einer Präzisionsdrehmaschine mit nicht unterbrochenem Schnitt, dargestellt im Frequenzbereich,

Fig. 6     die Prinzipdarstellung eines adaptiven Filters für die Vorhersage bei einer Schwingung nach Fig. 5,

Fig. 7     einen Vergleich einer realen Verlagerung mit den vorberechneten Werten bei einer Schwingung entsprechend Fig. 5,

Fig. 8     ein zweites Beispiel für eine Werkzeug-Werkstück-Schwingung einer Fräsmaschine mit unterbrochenem Schnitt, dargestellt im Frequenzbereich,

Fig. 9     eine Prinzipdarstellung eines adaptiven Filters für die Vorhersage bei einer Schwingung nach Fig. 8,

Fig. 10     einen Vergleich einer realen Verlagerung mit den vorberechneten Werten bei einer Schwingung entsprechend Fig. 8,

Fig. 11     eine Prinzipdarstellung der Meßwertverarbeitung bei indirekter Meßwertaufnahme,

Fig. 12     die Oberflächenstruktur eines Werkstückes nach einer normalen Bearbeitung,

Fig. 13     die Oberflächenstruktur eines Werkstückes nach einer Bearbeitung mit dem erfindungsgemäßen Verfahren und

Fig. 14     die Modellbildung bei dem erfindungsgemäßen Verfahren bei Anwendung der Kraftmessung.

Die Ausführungsbeispiele beziehen sich auf eine Variante mit einem zusätzlich angeordneten Aktor.

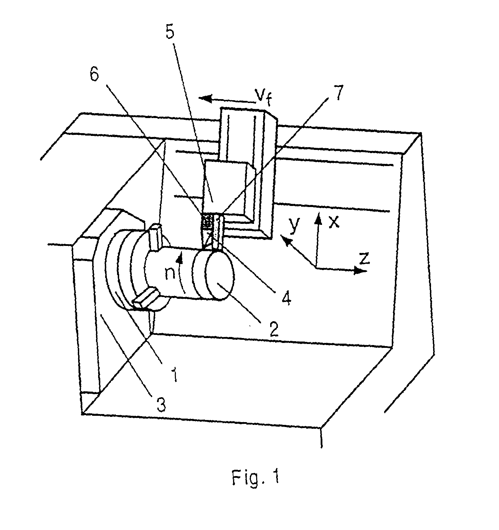

Das Verfahren wird zunächst anhand einer Drehmaschine erläutert. Fig. 1 zeigt die Prinzipdarstellung einer solchen Drehmaschine mit einer Spindel 1, in deren Werkstückaufnahme ein Werkstück 2 eingespannt ist. Die Spindel 1 ist in einem Spindelkasten 3 gelagert. Das Drehwerkzeug 4 wird in einem Werkzeughalter 5 unter Zwischenschaltung eines Aktors 6 gehalten.

Der Abstand zwischen dem Werkstück 2 und dem Werkzeughalter 5 wird ständig durch einen kapazitiven Sensor 7 gemessen. Der Durchmesser der Sensorfläche ist mit mehreren Millimetern wesentlich größer als die Schnittbreite des Drehwerkzeuges 4 auf dem Werkstück 2. Auf dem runden Werkstück 2 werden hierdurch Oberflächenrauhheiten auf dem Werkstück 2 nicht erfaßt.

Das Achsenkreuz zeigt die möglichen Bewegungsrichtungen von Werkstück 2 und Drehwerkzeug 4 an. x ist in diesem Fall die Sensitivitätsrichtung, in der sich das Werkstück 2 und/oder das Drehwerkzeug 4 aufgrund von Schwingungen in der Maschine geringfügig aufeinander zu oder voneinander weg bewegen können.

Der Aktor 6 ist nur in der x-Richtung bewegbar. In diesem Beispiel soll es sich um einen piezoelektrisch angetriebenen Aktor 6 handeln, der mittels des erfindungsgemäßen Verfahrens angesteuert wird. Die Verschiebung des Drehwerkzeuges 4 durch den Aktor 6 erfolgt im µm-Bereich. In dem Maße, wie es gelingt, den Aktor phasen- und amplitudengleich einer Änderung des Abstands zwischen Werkstück 2 und Drehwerkzeug 4 entgegenwirken zu lassen, wird die Oberfläche des Werkstücks 2 verbessert werden.

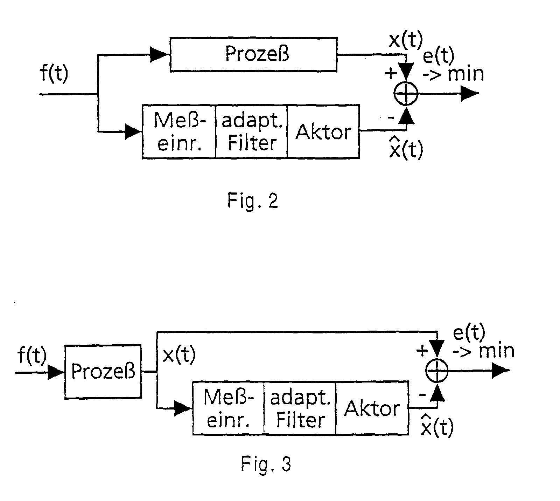

Die Figuren 2 und 3 zeigen einen Vergleich des erfindungsgemäßen Kompensationsverfahrens mit dem bisher bekannten Verfahren der Echokompensation. Bei der Echokompensation werden die eine Verlagerung hervorrufenden Störgrößen f(t) an ihrem Entstehungsort weit vor ihrem Wirkungsort gemessen. Gemessen wird z.B. eine Schwingung an den Antrieben, die, bedingt durch die Maschinenkonstruktion, erst mit einer gewissen zeitlichen Phasenverschiebung am Drehwerkzeug 4 als Prozeßausgangswert auftritt.

Diese Phasenverschiebung wird ausgenutzt, um das gemessene Signal für eine Zustellbewegung $\hat{x}$(t) des Aktors 6 zu verarbeiten, der aufgrund seiner Trägheit eine bestimmte Reaktionszeit benötigt, die, einschließlich der Signalverarbeitungszeit, geringer sein muß als die Laufzeit der Schwingung von ihrem Meßort bis zum Wirkungsort. Die Zustellung muß dann möglichst phasen- und auch amplitudengleich mit der am Werkstück auftretenden Verlagerung erfolgen. Eine genaue Kompensation ist mit dem Verfahren aufgrund der Schwierigkeiten bei einer genauen Modellbildung des Prozesses nicht möglich.

Das erfindungsgemäße Verfahren arbeitet dagegen mit der Vorhersage (Prädiktion) eines Verlagerungswertes $\hat{x}$(t), der durch Modellbildung aus den Vergangenheitswerten der gemessenen Verlagerungswerte x($t_i$) bestimmt wird. Entsprechend dem Vorhersagewert $\hat{x}$($t_i$) erfolgt die Zustellung des Aktors 6. Die Vorhersage kompensiert den Einfluß der Verzögerung durch die Meß-, Rechen- und Aktorstrecke.

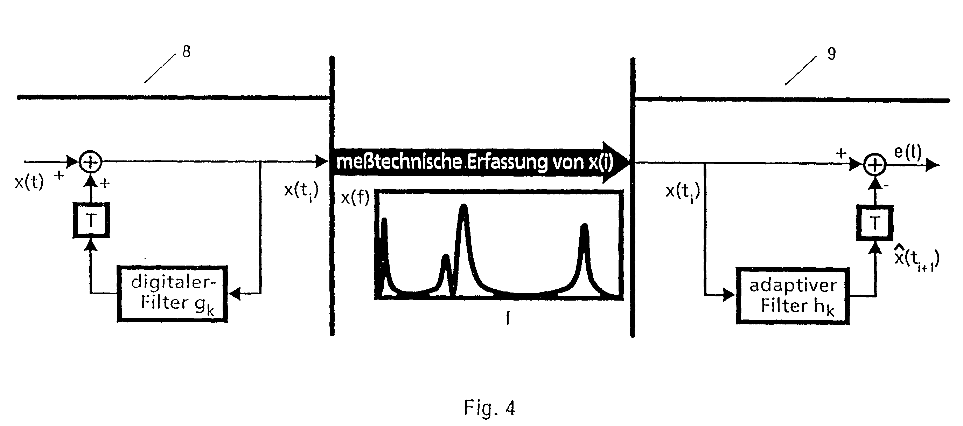

Fig. 4 zeigt ein zur Bildung eines solchen Vorhersagewertes geeignetes Modell. Die im Abstastintervall T zu dem Abtastzeitpunkten $t_i$ gemessenen Verlagerungswerte x($t_i$) werden in einem mathematischen Prozeßmodell 8 verarbeitet, das die nichtstatistischen Anteile der Verlagerungswerte x($t_i$) generiert.

Eine besonders einfache Implementation der Vorhersage ergibt sich, wenn das Abtastintervall T des Signals x(t), wie im vorliegenden Ausführungsbeispiel, gleich der Gesamtverzögerungszeit gewählt wird.

Im vorliegenden Fall handelt es sich um ein autoregressives Prozeßmodell.

Die aus dem Prozeßmodell 8 resultierende Spektralverteilung bildet den Eingang für die Prozeßanalyse 9, bei der aus dieser Spektralverteilung für den nächsten Abtastzeitpunkt $t_{i+1}$ ein Vorhersagewert $\hat{x}$($t_{i+1}$) bestimmt wird. Dieser Vorhersagewert $\hat{x}$($t_{i+1}$) dient zur Ansteuerung des Aktors 6.

Das Abtastintervall T wird dabei so groß gehalten, daß es gleich der Gesamtverzögerungszeit der Meß-, Rechen- und Aktorstrecke ist. Je genauer der Vorhersagewert x($t_{i+1}$) mit dem auf den Abtastzeitpunkt $t_i$ folgenden realen Verlagerungswert x($t_{i+1}$) übereinstimmt, desto kleiner ist der verbleibende Prädiktionsfehler e(t). Dieser Fehler wird insbesondere bestimmt durch die stochastischen Anteile in der Störgröße.

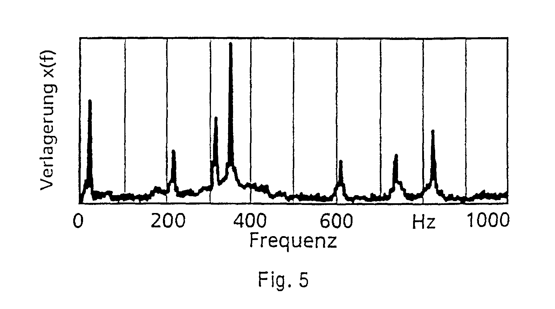

Fig. 5 zeigt das Frequenzspektrum einer typischen Werkzeug-Werkstück-Schwingung, wie sie in einer Drehmaschine bei nicht unterbrochenem Eingriff eines Drehwerkzeuges auftritt. Im vorliegenden Beispiel erfolgte die Bearbeitung bei einer Drehzahl von n = 1.000 min$^{-1}$. Die Ermittlung eines Vorhersagewertes erfolgte nur für den jeweils nachfolgenden Abtastzeitpunkt $t_{i+1}$.

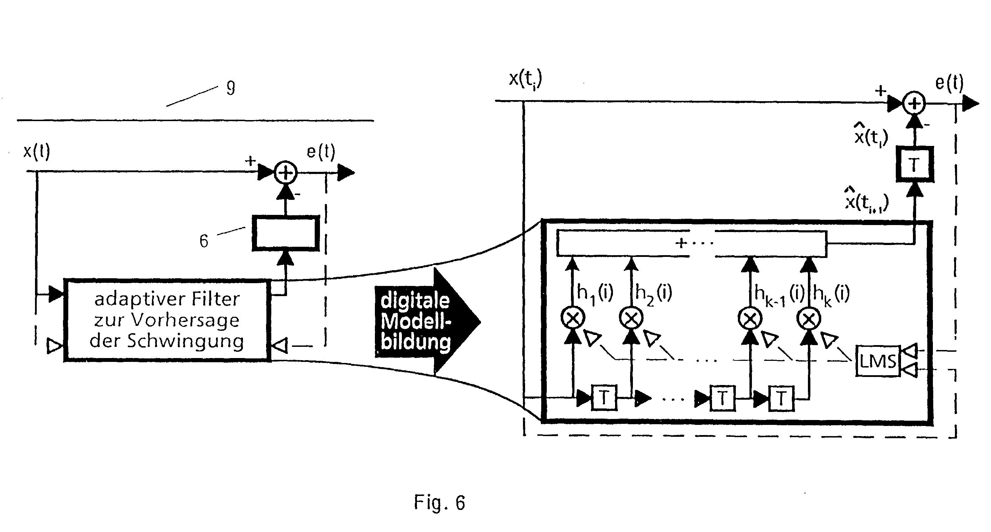

Fig. 6 zeigt das Arbeitsprinzip des adaptiven Filters für diesen Fall. Die Filterkoeffizienten $h_k$(i) werden in jedem Abtastintervall mittels des Least-Mean-Square-Algorithmus aktualisiert, wobei der aktuell gemessene Verlagerungswert x($t_i$) verarbeitet wird. Zusätzlich wird in diesem Beispiel auch der jeweils verbliebene Kompensationsfehler e($t_i$) berücksichtigt, der separat gemessen wird. Auf diese Weise gelingt es, auch transiente Verlagerungen, die z.B. durch thermische Vorgänge am Werkzeug und Werkstück bedingt sind, auszugleichen.

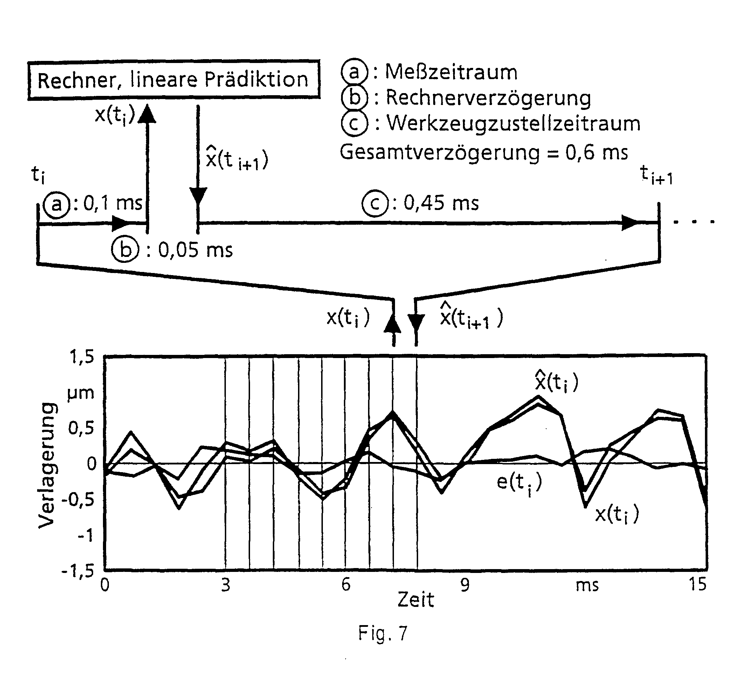

Fig. 7 zeigt die praktisch gemessene Verlagerung an einer Drehmaschine, wobei in dem Prozeßmodell 8 und auch bei der Prozeßanalyse 9 der Zeitrang von jeweils 8 Abtastintervallen T berücksichtigt wurde. x($t_i$) ist die tatsächlich gemessene Verlagerung, $\hat{x}$($t_i$) der zu jedem Abtastzeitpunkt bestimmte Vorhersagewert und e($t_i$) der verbleibende Kompensationsfehler. Praktisch wurden 59% der folgenden Verlagerungen kompensiert.

Wie der obere Teil der Figur zeigt, betrug die Verzögerungszeit des Aktors 6 0,45 ms, die Rechenzeit 0,05 ms und die Meßzeit 0,1 ms. Hieraus addiert sich das erforderliche Vorhersage- gleich Abtastintervall T zu 0,6 ms. Damit ergab sich eine Frequenz von etwa 1700 Hz, womit die typischerweise in Werkzeugmaschinen auftretenden relevanten Frequenzen von unter 500 Hz kompensiert werden konnten.

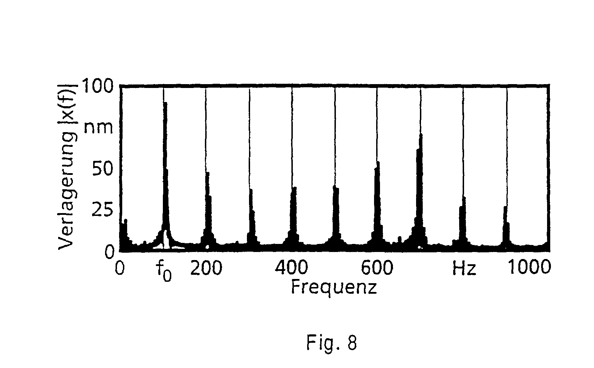

Die Figuren 8-10 zeigen ein Beispiel für die Bestimmung von Vorhersagewerten für eine Fräsmaschine. Bei einer Fräsmaschine tritt, bedingt durch den ständig wieder unterbrochenen Eingriff des Schnittwerkzeuges, ein prinzipiell anderes Frequenzspektrum der Werkzeug-Werkstück-Schwingungen auf als bei einer Drehmaschine, wie auch aus einem Vergleich von Fig. 8 und Fig. 5 leicht ersichtlich ist. Bei einer Umdrehungszahl von n = 6000 min$^{-1}$ treten eine Grundfrequenz von $f_0$ = 100 Hz und entsprechende Harmonische auf.

Die Art des Frequenzspektrums erlaubt eine Vorhersage für die der Grundfrequenz entsprechende Schwingungsperiode und damit eine kombinierte Kurz- und Langzeitvorhersage.

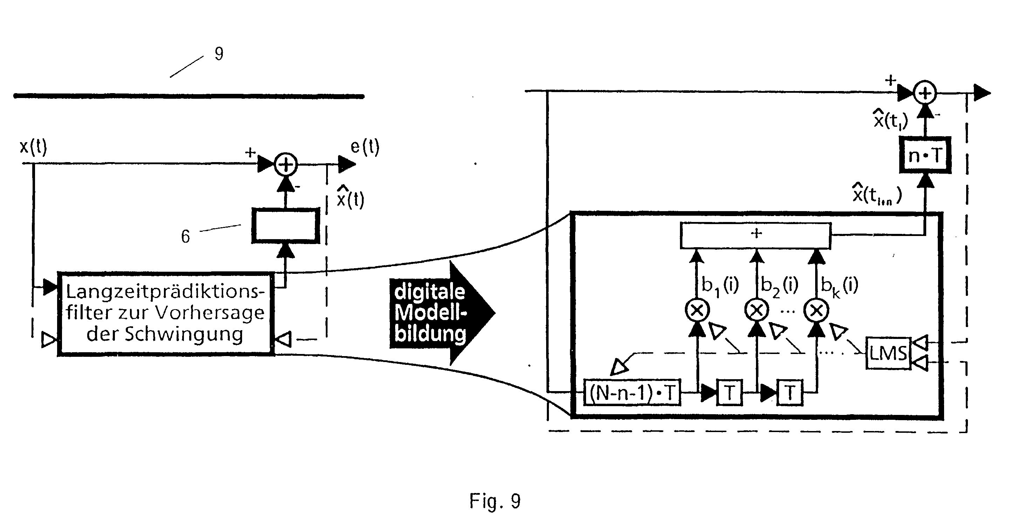

Fig. 9 zeigt das Arbeitsprinzip des adaptiven Filters für eine Langzeitvorhersage (Long-Term-Prediction). Die Filterkoeffizienten $b_k(i)$ werden für eine Periode der Grundfrequenz $f_o$ bestimmt, so daß innerhalb der Periode Vorhersagewerte ermittelt werden können, die dem tatsächlichen Verlagerungswert $x(t_i)$ um den Verzögerungswert n.T, d.h. um eine Schwingungsperiode N der Grundfrequenz $f_o$ vorauseilen, wobei

$$N = n.T = 1/f_o$$

ist.

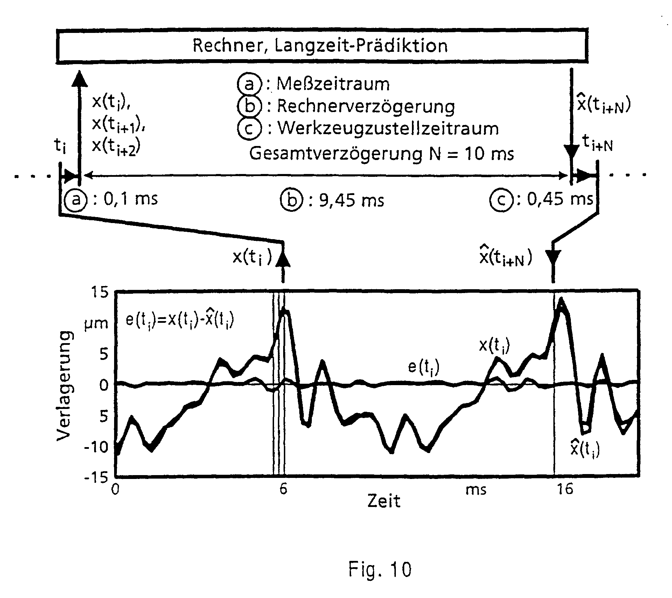

Fig. 10 zeigt real gemessene Verlagerungswerte für eine Grundfrequenz von

$f_o$ = 1000 Hz (Umdrehungszahl n = 6000 $min^{-1}$) sowie wiederum die Kurve der Vorhersagewerte x(t) und den verbleibenden Kompensationsfehler e(t).

Der obere Teil der Figur zeigt wiederum die Aufteilung der Verzögerungszeiten, wobei in diesem Beispiel die Rechnerverzögerung den größten Anteil hat.

Bisher wurde davon ausgegangen, daß die Verlagerung $x(t_i)$ direkt zwischen dem Werkstück und dem Werkzeug gemessen wird. Bei z. B. sehr kleinflächigen oder abgesetzten Werkstücken ist eine direkte Messung nicht möglich. Es wird deshalb eine Verlagerung an den Stellen gemessen, die letztlich für die am System Werkzeug-Werkstück auftretende Verlagerung verantwortlich ist. Das sind der Spindelrundlauffehler im Spindelkasten und die Spindelkastenschwingung, die zusammen die Werkstückschwingung ergeben, und die Schwingung des Werkzeughalters gegenüber der Maschine. Alle drei ergeben addiert die dynamische Verlagerung, die bei einer Bearbeitung zu dem Oberflächenfehler auf dem Werkstück führt.

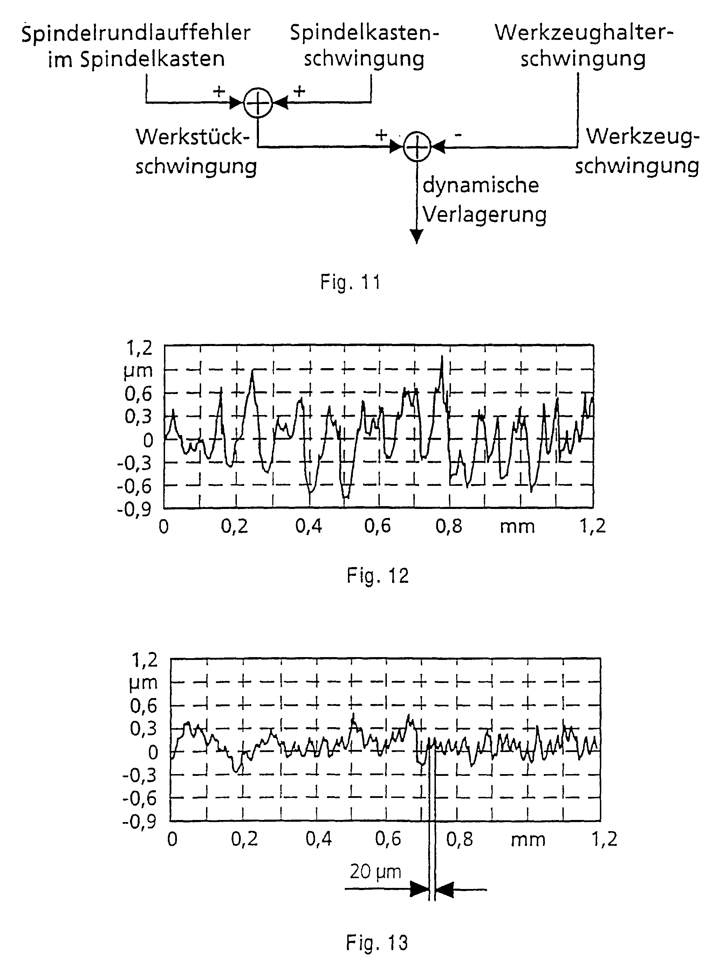

Fig. 11 zeigt schematisch das Zusammenwirken der verschiedenen Schwingungen, die zu einer dynamischen Verlagerung führen.

Die Figuren 12 und 13 zeigen Diagramme von gemessenen Oberflächen nach Bearbeitung eines Werkstückes auf einer Drehmaschine mit und ohne die erfindungsgemäße Verlagerungskompensation. Gedreht wurde bei einer Umdrehungszahl von n = 1000 $min^{-1}$, einem Schneidenradius von 0,3 mm und einem Vorschub von 20 µm/Umdrehung. Der Vergleich zeigt, daß eine Verringerung der Oberflächenrauhigkeit etwa um den Faktor 2 erreicht wurde. Theoretische Analysen für andere Arten von Werkzeugmaschinen ergaben, daß teilweise noch sehr viel höhere Reduktionen der Oberflächenrauhigkeit erreichbar sein werden.

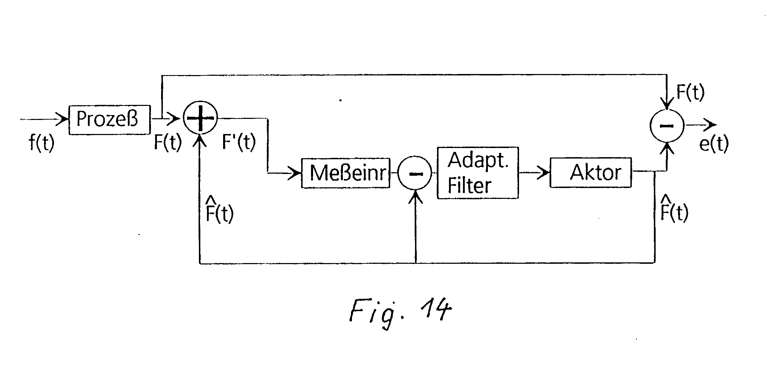

Alternativ zur direkten Messung der Verlagerung x(t) kann die Störgröße auch durch Messung der bei der Bearbeitung entstehenden Kraft F(t) zwischen Drehwerkzeug 4 und Werkstück 2 gemessen werden. Fig. 14 zeigt die Modellbildung für diesen Fall. Das Kraftsignal F(t) bildet in guter Näherung die Verlagerung x(t) zwischen Drehwerkzeug 4 und Werkstück 2 bzw. zwischen Werkzeughalter 5 und Werkstück 2 ab, da ein weitgehend linearer Zusammenhang zwischen Kraft und Schnittiefe besteht. Durch den Aktor 6 wird das Drehwerkzeug 4 mit einem durch Modellbildung aus den Vergangenheitswerten des Störgrößenverhaltens ermittelten Zustellwert F(t) zugestellt. Da die Messung im Kraftfluß erfolgt und somit nicht mehr die Störgröße F(t) selbst, sondern um die Zustellung des Aktors 6 modifizierte Störgröße F'(t) gemessen wird, muß vor der Adaption des Filters eine Korrektur des Meßsignals in der Größe der Aktorzustellung erfolgen, um das Störgrößenverhalten abzubilden. Der der Zustellung des Aktors 6 entsprechende Zustellwert F(t) wird deshalb von dem Kraftsignal subtrahiert. Das resultierende Signal gibt dann das Störgrößenverhalten wieder.

**Patentansprüche**

1. Verfahren zur Kompensation dynamischer Verlagerungen an spanabhebenden Werkzeugmaschinen, die in Sensitivitätsrichtung zwischen Werkzeug und Werkstück als Abweichung von einer Sollgröße auftreten,
   **dadurch gekennzeichnet,**

   daß die die Verlagerungen an ihrer Wirkstelle zwischen Werkzeug und Werkstück unmittelbar bestimmenden Störgrößen ermittelt werden,

   daß aus den Störgrößen ein mathematisches Prozeßmodell generiert wird, auf dessen Basis die nichtstatistischen Anteile der Störgrößen generiert werden,

   daß auf der Basis dieses Prozeßmodells eine voreilende Schätzung des zukünftigen Verhaltens der an der Wirkstelle auftretenden Störgrößen

   und entsprechend diesem zukünftigen Störgrößenverhalten die Kompensation der Verlagerung in Sensivitätsrichtung vorgenommen wird.

2. Verfahren nach Anspruch 1, dadurch gekennzeichnet, daß die Kompensation der Verlagerung in Sensivitätsrichtung durch die Zustellung eines zusätzlichen in der Maschine in Sensivitätsrichtung wirksamen Aktors erfolgt.

3. Verfahren nach Anspruch 1, dadurch gekennzeichnet, daß die Kompensation der Verlagerung in Sensivitätsrichtung durch die Zustellung eines vorhandenen, in Sensivitätsrichtung wirksamen Antriebes der Maschine erfolgt.

**4.** Verfahren nach Anspruch 1, dadurch gekennzeichnet, daß die Kompensation der Verlagerung in Sensivitätsrichtung durch die dynamische Verschiebung einer zusätzlichen an der Maschine angeordneten Hilfsmasse in Sensivitätsrichtung erfolgt.

**5.** Verfahren nach einem der Ansprüche 1 bis 4, dadurch gekennzeichnet, daß als Störgröße die Verlagerung direkt Zwischen Werkstück und Werkzeughalterung gemessen wird.

**6.** Verfahren nach einem der Ansprüche 1 bis 4, dadurch gekennzeichnet, daß als Störgrößen die Bewegungen am Werkzeughalter, am Spindelkasten und/oder an der Spindel in Sensitivitätsrichtung gemessen werden.

**7.** Verfahren nach einem der Ansprüche 1 bis 4, dadurch gekennzeichnet, daß als Störgröße die bei der Bearbeitung entstehende Kraft zwischen Werkzeug und Werkstück gemessen wird.

**8.** Verfahren nach Anspruch 7, dadurch gekennzeichnet, daß die Kräfte zwischen Werkzeug und Werkstück in Sensitivitätsrichtung und/oder senkrecht zu dieser gemessen werden.

**9.** Verfahren nach einem der vorhergehenden Ansprüche, dadurch gekennzeichnet, daß das mathematische Prozeßmodell einen autoregressiven Charakter hat.

**10.** Verfahren nach einem der Ansprüche 1 bis 8, dadurch gekennzeichnet, daß das mathematische Prozeßmodell nach der Moving-Average-Methode arbeitet.

**11.** Verfahren nach einem der vorhergehenden Ansprüche, dadurch gekennzeichnet, daß das mathematische Prozeßmodell in Form eines Filters benutzt wird.

**12.** Verfahren nach einem der vorhergehenden Ansprüche, dadurch gekennzeichnet, daß die Schätzung mindestens um die Gesamtverzögerungszeit der Meß-, Rechen- und der Zustellstrecke voreilt.

**13.** Verfahren nach einem der vorhergehenden Ansprüche, dadurch gekennzeichnet, daß die aufgrund einer Schätzung erfolgte Zustellung gemessen, mit der tatsächlichen Verlagerung verglichen und die Differenz zur Adaption des mathematischen Prozeßmodells verwendet wird.

**14.** Verfahren nach einem der Ansprüche 1 bis 12, dadurch gekennzeichnet, daß der Schätzwert mit der tatsächlichen Verlagerung verglichen und die Differenz zur Adaption des mathematischen Prozeßmodells verwendet wird.

**15.** Verfahren nach einem der Ansprüche 1 bis 12, dadurch gekennzeichnet, daß die Störgröße und die Differenz zwischen realer und zuvor geschätzter Störgröße zur Adaption des mathematischen Prozeßmodells verwendet werden.

**16.** Verfahren nach einem der vorhergehenden Ansprüche, dadurch gekennzeichnet, daß die Zustellung oder die Aktivierung der Hilfsmasse so gesteuert wird, daß ihre Wirkung zeitgleich mit der auf die Schätzung bezogenen realen Änderung der an der Wirkstelle auftretenden Störgröße ist.

**17.** Verfahren nach einem der Ansprüche 1 bis 15, dadurch gekennzeichnet, daß die Zustellung oder die Aktivierung der Hilfsmasse so gesteuert wird, daß ihre Wirkung zeitlich vor der auf die Schätzung bezogenen realen Änderung der an der Wirkstelle auftretenden Störgröße zustande kommt.

**18.** Vorrichtung an einer spanabhebenden Werkzeugmaschine mit einer Werkstückhaltevorrichtung und einem Werkzeughalter (5) zur Durchführung des Verfahrens nach einem der vorhergehenden Ansprüche,
gekennzeichnet durch
eine Meßeinrichtung (7) zur Messung der die Verlagerungen an der Wirkstelle unmittelbar bestimmenden Störgrößen (x(t)) und eine zur Darstellung eines mathematischen Prozeßmodells (8) geeignete Recheneinrichtung (9), die die gemessenen Störgrößen ($x_i$(t)) verarbeitet, eine Schätzung (x ($t_{i+1}$)) des zukünftigen Verhaltens der an der Wirkstelle auftretenden Störgröße (x (t)) vornimmt und entsprechend der Schätzung (x ($t_{i+1}$)) taktweise ein Signal für die Kompensation der Verlagerung in Sensivitätsrichtung (x) abgibt.

**19.** Vorrichtung nach Anspruch 18, dadurch gekennzeichnet, daß zur Kompensation der Verlagerung in Sensitivitätsrichtung (x) im System Werkzeug-Werkstück zusätzlich zu einem vorhandenen, in Sensivitätsrichtung (x) wirksamen Antrieb ein in Sensivitätsrichtung wirksamer Aktor (6) angeordnet ist.

**20.** Vorrichtung nach Anspruch 18, dadurch gekennzeichnet, daß zur Kompensation der Verlagerung in Sensitivitätsrichtung (x) auf mindestens einer der die Verlagerung verursachenden Maschinenkomponenten mindestens eine über einen Aktor in Sensitivitätsrichtung verschiebbare Hilfsmasse angeordnet ist.

**Claims**

1. A method for compensating for dynamic misalignments in cutting machine tools, these misalignments occurring in the sensitivity direction between tool and workpiece as a deviation from a desired variable,

   wherein the disturbances which directly determine the misalignments at their point of action between tool and workpiece are ascertained,

   wherein a mathematical process model is generated from the disturbances and used as the basis for generating the nonstatistical components of the disturbances,

   wherein, on the basis of this process model, a preliminary estimate of the future behavior of the disturbances occuring at the point of action is made,

   and, in accordance with this future disturbance behavior, the misalignment in the sensitivity direction is compensated for.

2. The method as claimed in claim 1, wherein the compensation for the misalignment in the sensitivity direction is carried out by feeding in an additional actuator that acts in the sensitivity direction in the machine.

3. The method as claimed in claim 1, wherein the compensation for the misalignment in the sensitivity direction is carried out by feeding in an existing drive of the machine that acts in the sensitivity direction.

4. The method as claimed in claim 1, wherein the compensation for the misalignment in the sensitivity direction is carried out by dynamically displacing in the sensitivity direction an additional auxiliary mass that is arranged on the machine.

5. The method as claimed in one of claims 1 to 4, wherein the misalignment between the workpiece and the tool holder is measured directly as the disturbance.

6. The method as claimed in one of claims I to 4, wherein the movements at the tool holder, at the headstock and/or at the spindle are measured in the sensitivity direction as the disturbances.

7. The method as claimed in one of claims 1 to 4, wherein the force produced between tool and workpiece during machining is measured as the disturbance.

8. The method as claimed in claim 7, wherein the forces between tool and workpiece are measured in the sensitivity direction and/or perpendicular to this.

9. The method as claimed in one of the preceding claims, wherein the mathematical process model has an autoregressive character.

10. The method as claimed in one of claims 1 to 8, wherein the mathematical process model operates in accordance with the moving average method.

11. The method as claimed in one of the preceding claims, wherein the mathematical process model is used in the form of a filter.

12. The method as claimed in one of the preceding claims, wherein the estimate leads by at least the total delay time of the measuring, computing and infeed period.

13. The method as claimed in one of the preceding claims, wherein the infeed that is made on account of an estimate is measured and compared with the actual misalignment, and the difference is used to adapt the mathematical process model.

14. The method as claimed in one of claims 1 to 12, wherein the estimated value is compared with the actual misalignment, and the difference is used to adapt the mathematical process model.

15. The method as claimed in one of claims 1 to 12, wherein the disturbance and the difference between the real and previously estimated disturbance are used to adapt the mathematical process model.

16. The method as claimed in one of the preceding claims, wherein the infeed or the activation of the auxiliary mass is controlled in such a way that its action coincides with the real change, based on the estimate, of the disturbance occurring at the point of action.

17. The method as claimed in one of claims 1 to 15, wherein the infeed or the activation of the auxiliary mass is controlled in such a way that its action occurs chronologically before the real change, based on the estimate, of the disturbance occurring at the point of action.

18. A device on a cutting machine tool having a workpiece holding device and a tool holder (5), for implementing the method as claimed in one of the preceding claims, defined by a measuring device (7) for measuring the disturbances (x(t)) directly determining the misalignments at the point of action, and a computing device (9) which is suitable for displaying a mathematical process model (8), processes the measured disturbances $(x_i(t))$, makes an estimate $(x(t_{i+1}))$ of the future behavior of the disturbance $(x(t))$ occurring at the point of action and, in accordance with the estimate $(x(t_{i+1}))$, cyclically outputs a signal to compensate for the misalignment in the sensitivity direction $(x)$.

19. The device as claimed in claim 18, wherein, in order to compensate for the misalignment in the sensitivity direction $(x)$, an actuator (6) that acts in the sensitivity direction is arranged in the tool/workpiece system in addition to an existing drive that acts in the sensitivity direction $(x)$.

20. The device as claimed in claim 18, wherein, in order to compensate for the misalignment in the sensitivity direction $(x)$, at least one auxiliary mass which can be displaced in the sensitivity direction by an actuator is arranged on at least one of the machine components causing the misalignment.

**Revendications**

1. Procédé de compensation de déplacements dynamiques dans des machines d'usinage par enlèvement de copeaux, qui se produisent dans la direction de sensibilité entre l'outil et la pièce en constituant un écart par rapport à une grandeur de consigne,
      caractérisé

   en ce que l'on détermine les grandeurs perturbatrices déterminant directement les déplacements à leur point d'action entre l'outil et la pièce,

   en ce que l'on génère, à partir des grandeurs perturbatrices, un modèle mathématique de processus sur la base duquel on génère les parties non statistiques des grandeurs perturbatrices,

   en ce que l'on procède, sur la base de ce modèle de processus, à une évaluation préalable du comportement futur des grandeurs perturbatrices apparaissant au point d'action,

   et en ce que, dans la mesure de ce comportement futur des grandeurs perturbatrices, on procède à la compensation du déplacement dans la direction de sensibilité.

2. Procédé suivant la revendication 1, caractérisé en ce que la compensation du déplacement dans la direction de sensibilité se fait par l'avance d'un actionneur supplémentaire agissant dans la machine dans la direction de sensibilité.

3. Procédé suivant la revendication 1, caractérisé en ce que la compensation du déplacement dans la direction de sensibilité se fait par l'avance d'un mécanisme d'entraînement existant dans la machine, agissant dans la direction de sensibilité.

4. Procédé suivant la revendication 1, caractérisé en ce que la compensation du déplacement dans la direction de sensibilité se fait par la translation dynamique d'une masse auxiliaire supplémentaire, disposée dans la machine, dans la direction de sensibilité.

5. Procédé suivant l'une quelconque des revendications 1 à 4, caractérisé en ce que l'on mesure directement le déplacement entre la pièce et le porte-outil comme grandeur perturbatrice.

6. Procédé suivant l'une quelconque des revendications 1 à 4, caractérisé en ce que l'on mesure, comme grandeurs perturbatrices, les mouvements au porte-outil, à la poupée et/ou à la broche dans la direction de sensibilité.

7. Procédé suivant l'une quelconque des revendications 1 à 4, caractérisé en ce que l'on mesure, comme grandeur perturbatrice, la force apparaissant pendant l'usinage entre l'outil et la pièce.

8. Procédé suivant la revendication 7, caractérisé en ce que l'on mesure les forces entre l'outil et la pièce dans la direction de sensibilité et/ou perpendiculairement à celle-ci.

9. Procédé suivant l'une quelconque des revendications précédentes, caractérisé en ce que le modèle mathématique de processus a un caractère autorégressif.

10. Procédé suivant l'une quelconque des revendications 1 à 8, caractérisé en ce que le modèle mathématique de processus opère suivant la méthode dite Moving-Average-Method.

11. Procédé suivant l'une quelconque des revendications précédentes, caractérisé en ce que le modèle mathématique de processus est utilisé sous la forme d'un filtre.

12. Procédé suivant l'une quelconque des revendications précédentes, caractérisé en ce que l'évaluation est faite comme avec une anticipation d'au moins le temps de retard total de la plage de mesure, de calcul et d'avance.

**13.** Procédé suivant l'une quelconque des revendications précédentes, caractérisé en ce que l'avance opérée sur la base d'une évaluation est mesurée, comparée avec le déplacement effectif et la différence est utilisée pour l'adaptation du modèle mathématique de processus.

**14.** Procédé suivant l'une quelconque des revendications 1 à 12, caractérisé en ce que la valeur évaluée est comparée avec le déplacement effectif et la différence est utilisée pour l'adaptation du modèle mathématique de processus.

**15.** Procédé suivant l'une quelconque des revendications 1 à 12, caractérisé en ce que la grandeur perturbatrice et la différence entre la grandeur perturbatrice réelle et celle évaluée au préalable sont utilisées pour l'adaptation du modèle mathématique de processus.

**16.** Procédé suivant l'une quelconque des revendications précédentes, caractérisé en ce que l'avance ou l'activation de la masse auxiliaire est commandée de telle façon que son effet soit simultané avec le changement réel, rapporté à l'évaluation, de la grandeur perturbatrice apparaissant au point d'action.

**17.** Procédé suivant l'une quelconque des revendications 1 à 15, caractérisé en ce que l'avance ou l'activation de la masse auxiliaire est commandée de telle façon que son effet se manifeste dans le temps avant le changement réel, rapporté à l'évaluation, de la grandeur perturbatrice apparaissant au point d'action.

**18.** Dispositif monté sur une machine d'usinage par enlèvement de copeaux, avec un dispositif porte-pièce et un porte-outil (5), pour la mise en oeuvre du procédé suivant l'une quelconque des revendications précédentes,
caractérisé par

un dispositif de mesure (7) pour la mesure des grandeurs perturbatrices [x(t)] déterminant directement les déplacements au point d'action, et
un dispositif de calcul (9) convenant pour la représentation d'un modèle mathématique de processus (8), qui traite les grandeurs perturbatrices mesurées [$x_i(t)$], procède à une évaluation [$x(t_{i+1})$] du comportement futur de la grandeur perturbatrice [x(t)] apparaissant au point d'action et émet périodiquement un signal, en fonction de l'évaluation [$x(t_{i+1})$], pour la compensation du déplacement dans la direction de sensibilité (x).

**19.** Dispositif suivant la revendication 18, caractérisé en ce qu'un actionneur (6) agissant dans la direction de sensibilité est monté dans le système outil-pièce, en plus d'un mécanisme d'entraînement existant agissant dans la direction de sensibilité (x), pour la compensation du déplacement dans la direction de sensibilité (x).

**20.** Dispositif suivant la revendication 18, caractérisé en ce que, pour la compensation du déplacement dans la direction de sensibilité (x), au moins une masse auxiliaire déplaçable dans la direction de sensibilité au moyen d'un actionneur est montée sur au moins un des composants de la machine causant le déplacement.

Fig. 1

Prozeß

f(t)

x(t)
e(t)
-> min
+

Meßeinr. | adapt.
Filter | Aktor

-
$\hat{x}(t)$

Fig. 2

f(t) Prozeß

x(t)

e(t)
-> min
+

Meßeinr. | adapt.
Filter | Aktor

-
$\hat{x}(t)$

Fig. 3

EP 0 883 463 B1

8

9

$x(t)$ +

+

T

digitaler-
Filter $g_k$

$x(t_i)$

meßtechnische Erfassung von x(i)

$x(f)$

f

$x(t_i)$

+

e(t)

-

T

$\hat{x}(t_{i+1})$

adaptiver
Filter $h_k$

Fig. 4

Fig. 5

Fig. 6

EP 0 883 463 B1

Rechner, lineare Prädiktion

(a) : Meßzeitraum
(b) : Rechnerverzögerung
(c) : Werkzeugzustellzeitraum
Gesamtverzögerung = 0,6 ms

$x(t_i)$

$\widehat{x}(t_{i+1})$

$t_i$

$t_{i+1}$

(a): 0,1 ms

(c): 0,45 ms

(b) : 0,05 ms

$x(t_i)$  $\widehat{x}(t_{i+1})$

$\widehat{x}(t_i)$

$e(t_i)$

$x(t_i)$

Verlagerung

1,5
μm
0,5
0
-0,5
-1
-1,5

0        3        6        9        ms        15

Zeit

Fig. 7

Fig. 8

Fig. 9

Fig. 10

Spindelrundlauffehler   Spindelkasten-   Werkzeughalterim Spindelkasten       schwingung      schwingung

Werkstückschwingung

Werkzeugschwingung

dynamische
Verlagerung

Fig. 11

Fig. 12

Fig. 13

20 µm

Fig. 14